# EUROPEAN PATENT APPLICATION

(11) **EP 4 435 974 A1**
(43) Date of publication of application: **25.09.2024**
(21) Application number: 24164919.3
(22) Date of filing: 20.03.2024
(51) Int. Cl.: H01R 4/30, H01R 4/70, H01R 13/44

(54) **HIGH-CURRENT MODULE CONNECTOR AND MODULE CONNECTOR SYSTEM WITH THE HIGH-CURRENT MODULE CONNECTOR**

(30) Priority: 23.03.2023 DE 102023107388
(71) Applicant: TE Connectivity Solutions GmbH, 8200 Schaffhausen (CH)
(72) Inventor: KAEHNY, Frank, 64625 Bensheim (DE); WOLF, Marcus, 64625 Bensheim (DE); EHEIM, Manuel, 64625 Bensheim (DE); HOFFMANN, Bjoern, 64625 Bensheim (DE); TOTH, Gerzson, 64625 Bensheim (DE)
(74) Representative: Patentanwaltskanzlei WILHELM & BECK

(57) **Abstract**

The invention relates to a high-current module connector (15, 20), to a module connector system (10) and to a method for installing the high-current module connector (15, 20), wherein the high-current module connector (15, 20) has at least one electrical connector (45) with a first connector portion (60), a threaded socket (50) and a housing (40), wherein the housing (40) is designed in the manner of a hollow body and encloses a housing interior (95), wherein the housing (40) has a latching device (115), a first insertion opening (90) arranged at the end and a feed opening (100) on a housing portion (80) extending circumferentially around the installation axis (35), wherein the connector (45) traverses the first feed opening (100) in such a way that the first connector portion (60) and the threaded socket (50) arranged on the first connector portion (60) are arranged in the housing interior (95), wherein the latching device (115) is arranged at the feed opening (100), wherein the latching device (115) retains the first connector portion (60) and the threaded socket (50) in the housing interior (95) by the threaded socket (50) bearing against the latching device (115).

## Description

The invention relates to a high-current module connector according to patent Claim 1, a module connector system according to patent Claim 8 and a method for installing the high-current module connector according to Claim 11.

WO 2022/242980 A1 discloses a touch protection screw connection device. The female screw connector here has a housing with a two-part design.

The object of the invention is to provide an improved high-current module connector and an improved module connector system.

This object is achieved by means of a high-current module connector according to patent Claim 1, by means of a module connector system according to patent Claim 8, and by means of a method for installing the high-current module connector according to Claim 11. Advantageous embodiments are specified in the dependent claims.

It has been identified that an improved high-current module connector for an electric vehicle can be provided by the high-current module connector having at least one electrical connector with a first connector portion, a threaded socket and a housing. The housing is designed in the manner of a hollow body and encloses a housing interior. The housing has a latching device, a first insertion opening arranged at the end and a feed opening on a housing portion extending circumferentially around the installation axis. The connector traverses the first feed opening in such a way that the first connector portion and the threaded socket arranged on the first connector portion are arranged in the housing interior. The latching device is arranged at the feed opening, wherein the latching device retains the first connector portion and the threaded socket in the housing interior by the threaded socket bearing against the latching device.

This configuration has the advantage that the connector portion and the threaded socket can together be assembled in the housing interior particularly quickly through the insertion opening and the latching device arranged at the insertion opening without there being any need for further installation of housing parts on the housing. Moreover, undesired slipping of the connector portion out of the housing interior is avoided, there no longer being a mating high-current module connector arranged on the high-current module connector.

The connector has a through opening extending along the installation axis in the first connector portion, wherein the threaded socket has a socket portion extending along the installation axis and a carrier portion adjoining the socket portion and which protrudes beyond the socket portion in a radial direction relative to the installation axis. The socket portion traverses the through opening of the connector along the installation axis and the carrier portion bears against the first connector portion on a side facing away from the first insertion opening. The latching device has a bearing surface on a side facing the housing interior. A second outer circumferential side of the carrier portion bears against the bearing surface. This configuration has the advantage that, because the carrier portion bears against the connector portion, a step is formed on that side of the first connector portion which is opposite the insertion opening, said step being used in conjunction with the latching device to fasten the locked arrangement consisting of the first connector portion and the threaded socket securely in the housing interior. As a result, the housing can have a particularly simple design such that a mould for producing the housing, for example in an injection-moulding process, can be formed particularly simply.

It is particularly advantageous here if the housing is manufactured as a single piece and from a single material, an electrically non-conductive first material. As a result, additional installation steps, for example in order to install a housing with a two-part design, can be omitted in the production of the high-current module connector such that the installation of the high-current module connector is particularly simple and comprises particularly few installation steps.

In a further embodiment, the housing has a base portion which is arranged opposite the first insertion opening and delimits the housing interior. The housing has a spring element, connected to the base portion, on the base portion. The spring element has a first engagement element, extending in the direction of the first insertion opening, at a second free end of the spring element. The first engagement element engages in the threaded socket on a side facing away from the first insertion opening. This configuration has the advantage that the arrangement consisting of the connector and the threaded socket is additionally retained in the housing interior and the threaded socket is held centred in the housing interior. It is consequently made easier to screw a screw of the mating high-current module connector into the threaded socket.

In a further embodiment, the threaded socket protrudes beyond the first connector portion with a first region on a side facing the first insertion opening. The feed opening has at least one first subregion and one second subregion adjoining the first subregion in the circumferential direction, wherein the second subregion is designed as being wider along the installation axis than the first subregion. The first region of the threaded socket can be passed through the second subregion. This configuration has the advantage that the threaded socket is designed as particularly long along the installation axis and a sufficient screw-in depth of the screw of the mating high-current module connector can thus be provided.

In a further embodiment, the first subregion of the feed opening is formed along the installation axis so that it corresponds to an extent of the first connector portion along the installation axis. This configuration has the advantage that undesired play of the arrangement of the connector and the threaded socket in the disassembled state, in the axial direction relative to the installation axis, is avoided.

In a further embodiment, the high-current module connector has a touch protection sleeve. The touch protection sleeve is arranged so that it is spaced apart from the housing in the housing interior on a side, facing the first insertion opening, of the first connector portion at the threaded socket. The touch protection sleeve is preferably manufactured from an electrically non-conductive material. By virtue of the touch protection sleeve, finger protection can be ensured in conjunction with an inner circumferential side of the housing on the side facing the first insertion opening in the direction of the first connector. This is in particular important when the high-current module connector is part of a battery module, in particular for example a battery module of a battery-powered electric vehicle.

The module connector system has a connection plate and a first high-current module connector. The first high-current module connector is designed as described above. The connection plate is arranged so that it is offset axially with respect to the housing relative to the installation axis. The connection plate has a plate portion, a second insertion opening arranged in the plate portion, and a connecting sleeve. The connecting sleeve extends along the installation axis in the direction of the first high-current module connector and is arranged at the second insertion opening on the plate portion. The connecting sleeve engages in the first insertion opening of the first high-current module connector. This configuration has the advantage that the first high-current module connector and the connection plate are oriented in a defined fashion relative to each other in the radial direction relative to the installation axis.

In a further embodiment, the module connector system has a second high-current module connector, arranged offset with respect to the first high-current module connector, and a compensation sleeve. The plate portion has a third insertion opening, wherein the third insertion opening is arranged offset with respect to the second insertion opening in the plate portion. The compensation sleeve extends along the installation axis of the second high-current module connector in the direction of the second high-current module connector. The compensation sleeve traverses the first insertion opening of the second high-current module connector and the third insertion opening. The compensation sleeve is connected to the connection plate so that it can be displaced in the radial direction with respect to the installation axis of the second high-current module connector. This configuration has the advantage that the second high-current module connector can be arranged radially offset with respect to the first high-current module connector with a high tolerance. The tolerance compensation is performed at the compensation sleeve with respect to the plate portion by virtue of the radial displaceability with respect to the installation axis of the second high-current module connector. As a result, there is no absolute need for a defined orientation, subject to narrow tolerances, of the first and second high-current module connector. In particular, the connector of the second high-current module connector can be produced, for example, in a stamping and bending process.

The compensation sleeve can be connected particularly simply to the connection plate by means of a bayonet connection. As a result, it is already ensured in the pre-installation stage that there is a secure connection between the compensation sleeve and the connection plate such that, when the connection plate is inserted together with the compensation sleeve, they can be assembled as a common unit at the first and second high-current module connector.

The abovedescribed high-current module connector can be assembled particularly simply by the electrical connector, the threaded socket and the housing being provided, wherein the threaded socket is guided by the first connector portion, wherein the electrical connector is guided, together with the threaded socket, through the feed opening, inclined with respect to the installation axis, wherein the latching device is latched onto the threaded socket and retains the first connector portion, together with the threaded socket, in the housing interior by the threaded socket bearing against the latching device.

The invention is explained in more detail below with reference to figures, in which:
- Figure 1: shows a perspective illustration of a module connector system;
- Figure 2: shows a perspective illustration of a high-current module connector shown in Figure 1;
- Figure 3: shows a perspective illustration of the housing of the first high-current module connector shown in Figures 1 and 2;
- Figure 4: shows a perspective illustration of a housing, shown in Figure 3, of the first high-current module connector;
- Figure 5: shows a perspective illustration of a connector of the first high-current module connector;
- Figure 6: shows a view in section along a plane of section A-A shown in Figure 2;
- Figure 7: shows a view in section along a plane of section B-B shown in Figure 1 through the module connector system shown in Figure 1;
- Figure 8: shows a view in section along a plane of section C-C shown in Figure 1 through the module connector system shown in Figure 1;
- Figure 9: shows a view from below of a connection plate of the module connector system shown in Figures 1 and 8;
- Figure 10: shows an illustration of a compensation sleeve shown in Figure 8;
- Figure 11: shows a view in section along a plane of section D-D shown in Figure 1 through the module connector system; and
- Figure 12: shows a view in section along a plane of section E-E shown in Figure 1 through the module connector system.

Reference is made in the following figures to a coordinate system to facilitate understanding. The coordinate system has an x-axis (longitudinal direction), a y-axis (transverse direction) and a z-axis (vertical direction). The coordinate system here takes the form, by way of example, of a right-handed system.

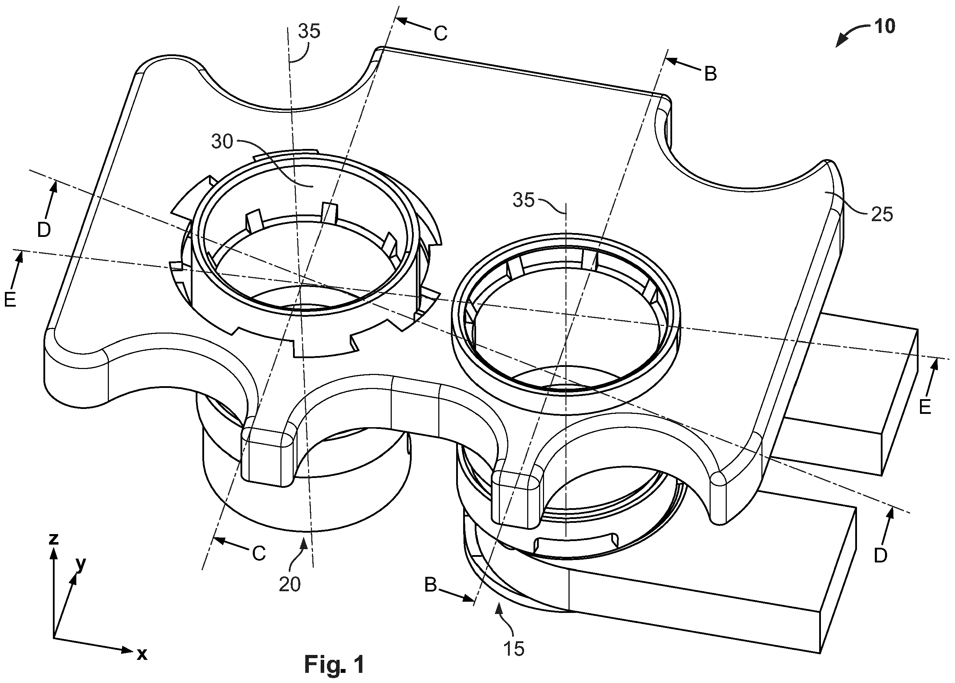

Figure 1 shows a perspective illustration of a module connector system 10.

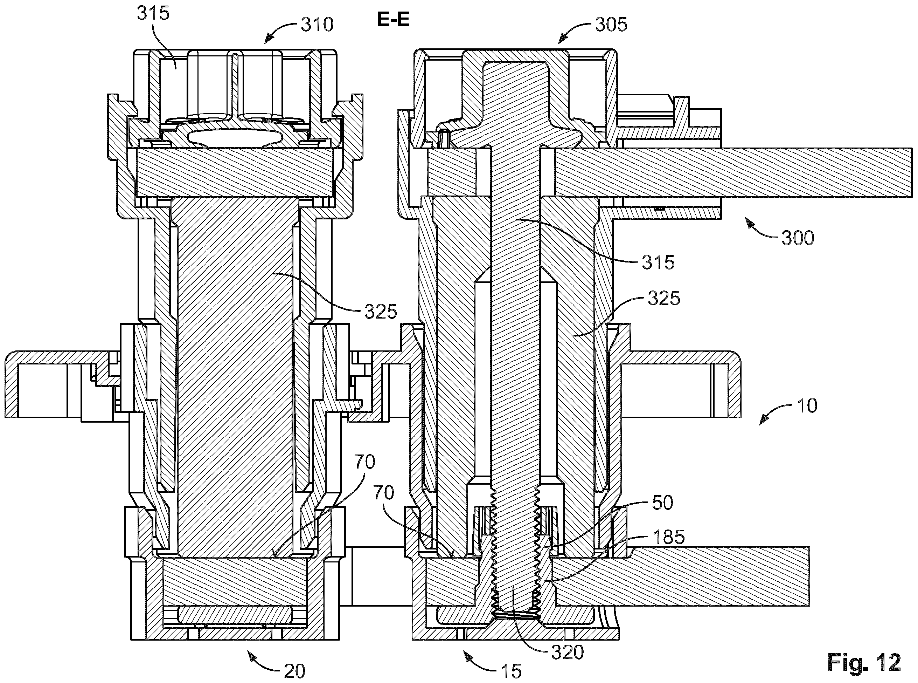

The module connector system 10 has a first high-current module connector 15 and a second high-current module connector 20. The module connector system 10 can also have just one of the two high-current module connectors 15, 20 or a plurality of high-current module connectors 15, 20. The module connector system 10 is designed to provide a connection possibility, for example at a battery module of a battery-powered electric vehicle. Thus, by means of the module connector system 10, the battery module can be electrically contacted with further battery modules, for example by means of a further module connector system 300 (illustrated in Figure 12).

In addition to the first high-current module connector 15 and the second high-current module connector 20, the module connector system 10 has a connection plate 25 and a compensation sleeve 30. The first high-current module connector 15 and the second high-current module connector 20 each extend along an installation axis 35. The installation axis 35 can here be arranged so that it runs parallel to the z-axis.

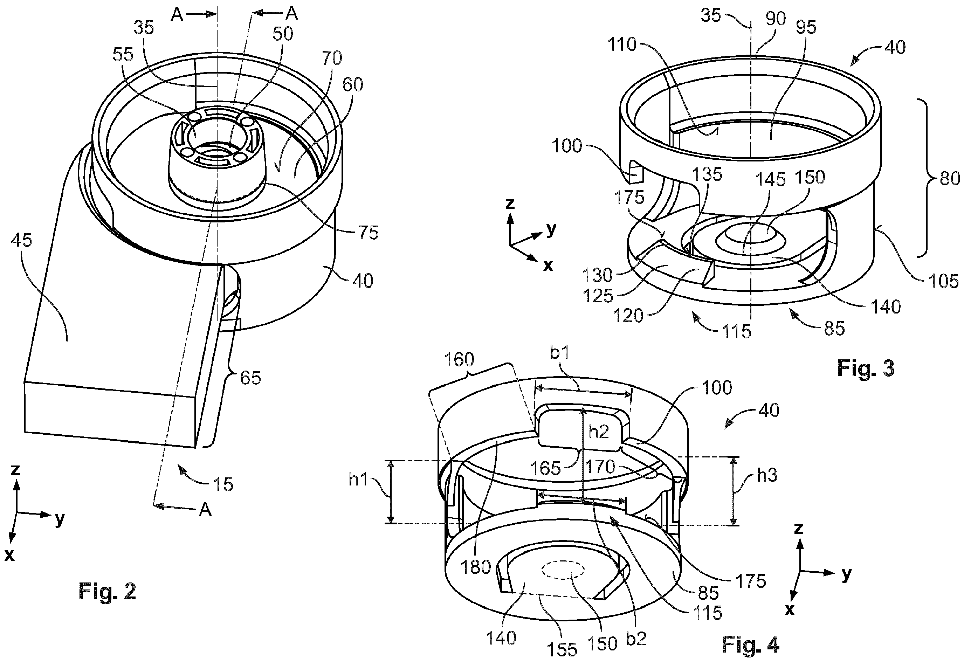

Figure 2 shows a perspective illustration of the high-current module connector 15 shown in Figure 1.

The first high-current module connector 15 and the second high-current module connector 20 have essentially an identical design. Further detail will be given below by way of example about the geometric configuration of the first high-current module connector 15.

The first high-current module connector 15 has a housing 40, an electrical connector 45, a threaded socket 50 and a touch protection sleeve 55. In the embodiment, the first high-current module connector 15 is designed, for example, as a socket contact connector and is designed to transmit a high electric current of 50 A to 2000 A, in particular 100 A to 500 A, at a voltage of 40 V to 1000 V.

The electrical connector 45 can here be designed by way of example as a busbar. The electrical connector 45 is electrically conductive and can comprise a first connector portion 60 and a second connector portion 65 adjoining the first connector portion 60 and connected to the first connector portion 60. The electrical connector 45 can have a rectangular cross-section in the second connector portion 65. The electrical connector 45 can be electrically connected, for example, to a battery cell array of a storage battery, in particular a traction battery of an electric vehicle, in particular a battery electric vehicle (BEV).

The first connector portion 60 can be designed, for example, as annular and adjoins the second connector portion 65. The first connector portion 60 can here protrude in the transverse direction beyond the second connector portion 65. The first connector portion 60 has a contact surface 70, illustrated on the upper side in Figure 2. The contact surface 70 is designed, for example, as annular and encloses a through opening 75 arranged in the first connector portion 60 and extending along the installation axis 35. The through opening 75 extends along the installation axis 35 completely through the first connector portion 60. The through opening 75 can have a circular cross-section.

Figure 3 is a perspective illustration of the housing 40 of the first high-current module connector 15 shown in Figures 1 and 2.

The housing 40 has an electrically non-conductive first material. The housing 40 is here manufactured from the first material as a single piece and from a single material, for example in an injection-moulding process.

The housing 40 encloses a housing interior 95 and has a housing portion 80, running as a hollow cylinder around the installation axis 35, and a base portion 85. The base portion 85 is arranged at the end of the housing portion 80 and closes the housing interior 95 at the end. The base portion 85 and the housing portion 80 are designed as a single piece and from a single material.

The housing 40 has a first insertion opening 90 on a side situated axially opposite the base portion 85 with respect to the installation axis 35. The first insertion opening 90 opens out in the housing interior 95 of the housing 40, said housing interior being enclosed by the housing portion 80 in the circumferential direction. The housing 40 moreover has a feed opening 100 in the housing portion 80. The feed opening 100 is delimited in the axial direction on one side by the base portion 85. The feed opening 100 is moreover arranged, spaced apart from the first insertion opening 90, on the side facing the first insertion opening 90. The feed opening 100 extends between a first outer circumferential side 105 of the housing portion 80 and an inner circumferential side 110 of the housing portion 80 and opens out into the housing interior 95. The feed opening 100 encloses, with respect to the installation axis 35, an angle which can be between 160° and 190°.

The housing 40 preferably has a latching device 115 on the base portion 85. The latching device 115 can have a latching lug 120 which is fastened on the base portion 85 at a first fixed end 125. A first free end 130 of the latching lug 120 projects into the feed opening 100. The latching device 115 is designed in the circumferential direction by way of example as thinner than an extent of the feed opening 100. An oblique side of the latching lug 125 with respect to the installation axis 35 is arranged radially externally on the latching lug 125 on a side facing away from the housing interior 95.

The latching lug 120 has a bearing surface 135 radially internally on a side facing the housing interior 95. The bearing surface 135 is configured, for example, in an axial direction parallel to the installation axis 35 and has, for example, a partially annular form, running around the installation axis 35 on a circular path.

In the base portion 85, which is arranged axially opposite the first insertion opening 90 with respect to the installation axis 35, the housing 40 has, for example, a spring element 140. The spring element 140 can be formed, for example, as a beam spring. The spring element 140 has a first engagement element 150 at or close to a second free end 145, wherein the first engagement element 150 extends in the axial direction from the spring element 140 in the direction of the first insertion opening 90 along the installation axis 35. The first engagement element 150 can be formed, for example, as a frustum. The first engagement element 150 is arranged, for example, so that it is centred on the installation axis 35.

Figure 4 shows a further perspective illustration of the housing 40 shown in Figure 3.

The spring element 140 is connected to the base portion 85 at a second fixed end 155. The spring element 140 can be designed as a single piece with and from the same material as the base portion 85 and the housing portion 80. Advantageously, the second fixed end 155 is, for example, arranged on a side situated opposite the feed opening 100.

The feed opening 100 directly adjoins the base portion 85 and is divided into at least one first subregion 160 and at least one second subregion 165. In addition, the feed opening 100 can have a third subregion 170. The second subregion 165 adjoins the first subregion 160 in the circumferential direction. The third subregion 170 adjoins the second subregion 165 on a side facing away from the first subregion 160. In the first subregion 160, the feed opening 100 has a first height h1 in the z direction. The first height h1 refers to a maximum distance between a base surface 175 of the base portion 85 and the contour 180, arranged opposite the base surface 175, of the feed opening 100 in the first subregion 160. The base surface 175 here adjoins the housing interior 95 and delimits the housing interior 95 at the end. The contour 180 is arranged in the first subregion 160 so that it runs parallel to the base surface 175. The feed opening 100 thus has the constant first height h1 in the first subregion 160.

The feed opening 100 is widened in the second subregion 165. The contour 180 is designed in the second subregion 165 as a bulge or groove-shaped widening of the feed opening 100, compared with the first subregion 160 and/or the third subregion 170. In the second subregion 165, the feed opening 100 has a second height h2 with respect to the base surface 175. The contour 180 in the second subregion 165 is here also designed so that it runs parallel to the base surface 175. The second subregion 165 extends in the circumferential direction over a first width b1. The latching device 115 is arranged in the second subregion 165 opposite the contour 180 in the z direction. The latching device 115 has a second width b2 in the circumferential direction, wherein the second width b2 can correspond essentially to the first width b1 of the contour 180 in the second subregion 165.

The third subregion 170 is designed as preferably identical to the first subregion 160. In the third subregion 170, the feed opening 100 has a third height h3 between the contour 180 and the base surface 175. The third height h3 can correspond, for example, to the first height h1. The third subregion 170 can essentially have the same width as the first subregion 160 in the circumferential direction. As a result, the feed opening 100 is designed, for example, as essentially symmetrical when viewing the second subregion 165.

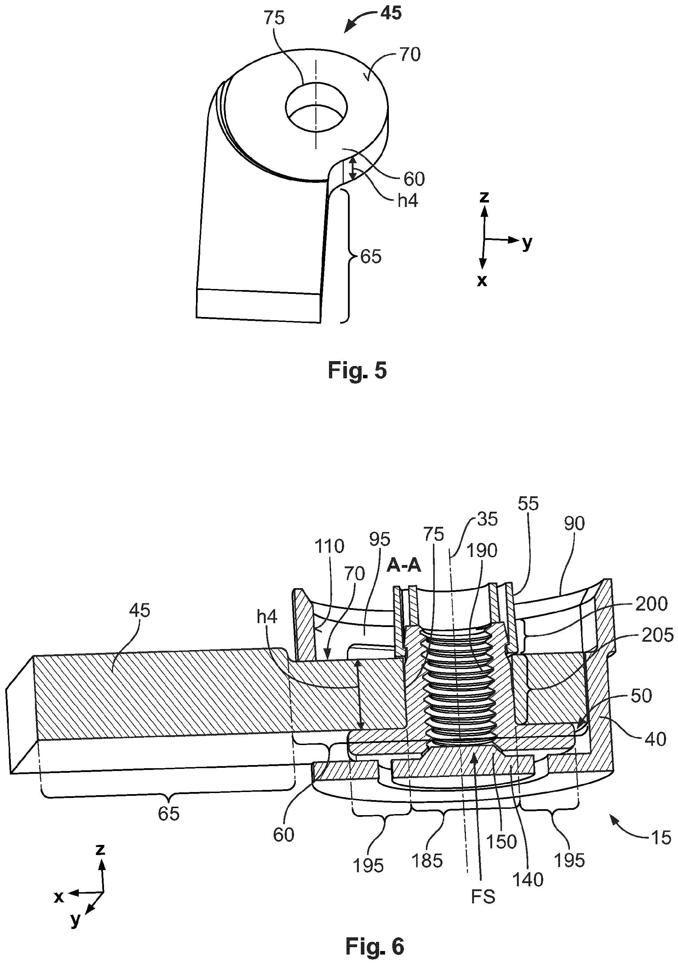

Figure 5 shows a perspective illustration of the connector 45 shown in Figure 2.

The annular form of the first connector portion 60 can be clearly seen in Figure 5. The first connector portion 60 is here designed as thinner in the z direction than in the second subregion 165. In the first subregion 160, the first connector portion 60 has a fourth height h4, wherein the fourth height h4 can correspond essentially to the first height h1 and the third height h3.

Figure 6 shows a view in section along a plane of section A-A shown in Figure 2.

The threaded socket 50 has a socket portion 185 extending along the installation axis 35. The socket portion 185 is open on both sides and has, for example, an internal thread 190 on the inside. A carrier portion 195 which is arranged at one end of the socket portion 185 adjoins the socket portion 185 radially externally. The carrier portion 195 can, for example, be designed as annular. The carrier portion 195 and the socket portion 185 are, for example, preferably produced as a single piece and from a single material from an electrically conductive second material. The carrier portion 195 bears on the first connector portion 60 on a side facing away from the contact surface 70. The socket portion 185 traverses the through opening 75 in the axial direction along the installation axis 35. The socket portion 185 here protrudes with a first region 200 beyond the contact surface 70 along the installation axis 35. A second region 205 is arranged in the through opening 75 and bears preferably radially externally on the through opening 75 such that the threaded socket 50 is centred on the through opening 75.

The touch protection sleeve 55 is produced from an electrically non-conductive third material. In particular, the third material can here be identical to the first material of the housing 40. The touch protection sleeve 55 is preferably fastened, in particular plugged, on the first region 200 of the socket portion 185 and bears, for example, on the underside of the contact surface 70. The contact surface 70 is contactable on the side facing the first insertion opening 90, between the touch protection sleeve 55 and the inner circumferential side 110.

In the assembled state of the first high-current module connector 15, the first engagement element 150 engages into the threaded socket 50 in the socket portion 185 on the side axially opposite the first insertion opening 90 and retains the threaded socket 50 in the radial direction in the housing interior 95. The spring element 140 is here preferably pretensioned and provides a clamping force FS which acts along the installation axis 35 and presses the threaded socket 50 axially in the direction of the first insertion opening 90. Alternatively, it is also possible that, in the assembled state, the tension of the spring element 140 is relieved but the engagement of the first engagement element 150 in the socket portion 185 is ensured.

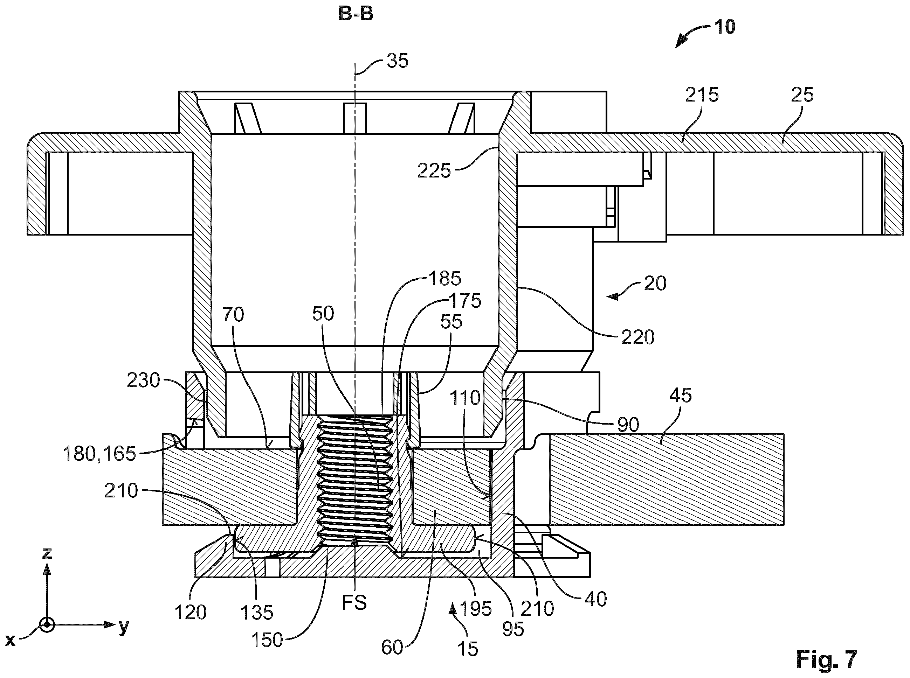

Figure 7 shows a view in section along a plane of section B-B, shown in Figure 1, through the module connector system 10 shown in Figure 1.

The radial position of the connector 45 in the housing interior 95, in particular of the first connector portion 60, is additionally secured by a second outer circumferential side 210 of the carrier portion 195 bearing on the bearing surface 135 of the latching lug 120.

Furthermore, one axial end of the socket portion 185 which is arranged on the side facing the first insertion opening 90 is arranged essentially approximately at the same height as the contour 180 in the second subregion 165.

It can moreover be seen that, by virtue of the engagement of the first engagement element 150 in the socket portion 185 of the threaded socket 50, the carrier portion 195 is arranged spaced apart from the base surface 175 and consequently an axial position with respect to the installation axis is ensured by the contact surface 70 bearing on the contour 180 in the first and third subregion 160, 170 of the feed opening 100.

The connection plate 25 has a plate portion 215. The plate portion 215 is designed as essentially plate-shaped and extends, by way of example, in an xy plane and thus essentially perpendicular to the installation axis 35. The plate portion 215 can be reinforced circumferentially by a collar.

In addition, the connection plate 25 has a connecting sleeve 220. The connecting sleeve 220 is designed, for example, as essentially tubular and extends circumferentially around the installation axis 35. The connecting sleeve 220 is connected at one end to the plate portion 215. In particular, the connecting sleeve 220 and the plate portion 215 can be produced as a single piece and from a single material from an electrically insulating fourth material. The connecting sleeve 220 adjoins in an axial direction a second insertion opening 225 of the plate portion 215 and extends in the direction of the first high-current module connector 15. On the side facing away from the plate portion 215, the connecting sleeve 220 is designed as tapering and engages in the housing interior 95 of the housing 40 of the first high-current module connector 15 via the first insertion opening 90. Part of the connecting sleeve 220 is thus arranged between the inner circumferential side 110 and the touch protection sleeve 55.

In order to maximize a surface area of the contact surface 70, the housing 40 can be widened in the housing portion 80 between the connector 45 and the first insertion opening 90 such that the engagement of the connecting sleeve 220 in the housing interior 95 between the first insertion opening 90 and the connector 45 essentially does not cause any significant loss of surface area on the contact surface 70 and the contact surface 70 is covered by the connecting sleeve 220 in the direction of the first and second insertion opening 90, 225.

A first radial gap 230 can be arranged between the connecting sleeve 220 and the inner circumferential side 110 for the purpose of tolerance compensation. A first offset in the radial direction between the first high-current module connector 15 and the connecting sleeve 220 can be compensated by the first radial gap 230. Moreover, the introduction of the connecting sleeve 220 into the housing interior 95 via the first insertion opening 90 is facilitated.

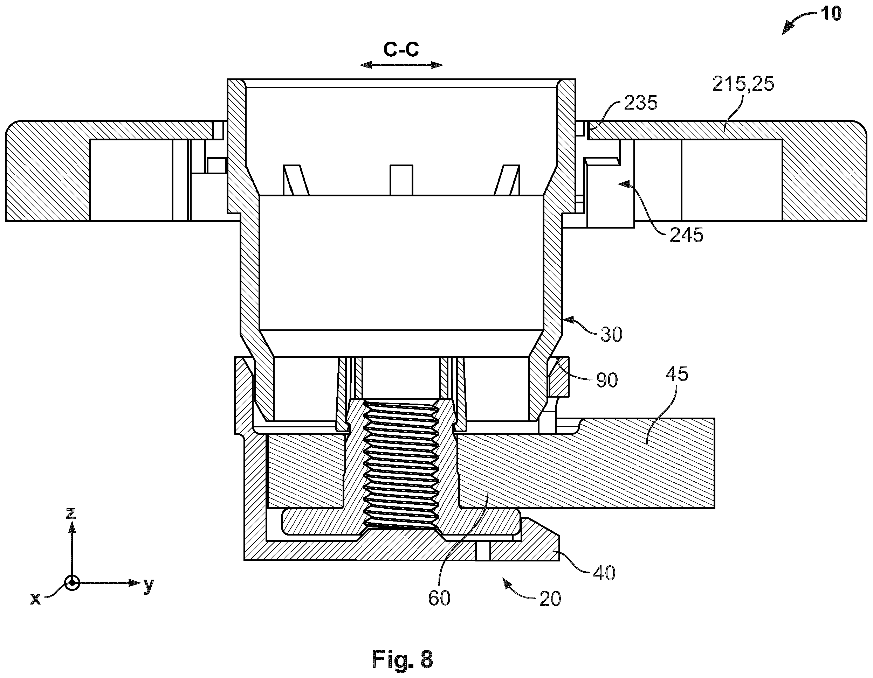

Figure 8 shows a view in section along a plane of section C-C, shown in Figure 1, through the module connector system 10 shown in Figure 1.

A third insertion opening 235 is moreover arranged in the plate portion 215 so that it is offset with respect to the second insertion opening 225. The third insertion opening 235 can have an essentially circular form. The third insertion opening 235 is here arranged essentially above the second high-current module connector 20.

As already mentioned above, the second high-current module connector 20 is designed as essentially identical to the first high-current module connector 15. In contrast, however, the connector 45 of the second high-current module connector 20 is guided, on the side opposite the connector 45 of the first high-current module connector 15 in the transverse direction, out of the housing 40 of the second high-current module connector 20. Moreover, the arrangement of the connecting sleeve 220 between the plate portion 215 and the second high-current module connector 20 is omitted. Instead, a compensation sleeve 30 is provided at the third insertion opening 235. The compensation sleeve 30 can be designed, for example, as stepped in the z direction, wherein an inner cross-section of the compensation sleeve 30 tapers from the installation axis 35 to the first insertion opening 90 of the second high-current module connector 20.

The compensation sleeve 30 traverses the third insertion opening 235 on one side and engages in the z direction in the first insertion opening 90 of the second high-current module connector 20 on the side opposite the third insertion opening 235 and ends above the first connector portion 60, preferably spaced apart from it.

In the x direction and y direction, the compensation sleeve 30 is connected to the connection plate 25 so that it can be displaced relative to the plate portion 215 and thus the connection plate 25. For this purpose, in the embodiment, a bayonet connection 245 is provided, by way of example, which is arranged, on the one hand, radially externally on the compensation sleeve 30 and, on the other hand, on the plate portion 215.

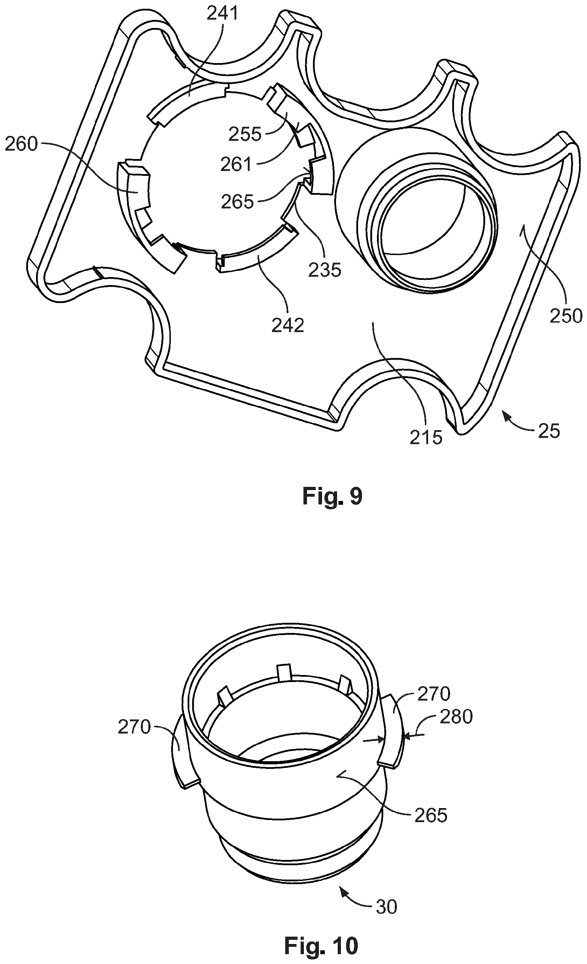

Figure 9 shows a view from below of the connection plate 25 of the module connector system 10 shown in Figures 1 and 8.

On an underside 250 of the plate portion 215 which faces the first and second high-current module connector 15, 20, a first bayonet fitting 255 and a second bayonet fitting 260 of the bayonet connection 245, which are arranged so they are offset in the circumferential direction with respect to each other, are preferably arranged at the third insertion opening 235. In addition, a third and/or fourth bayonet fitting 241, 242 of the bayonet connection 245 can be arranged on the underside 250 of the plate portion 215, wherein the third and fourth bayonet fitting 241, 242 are each arranged between the first and second bayonet fitting 255, 260.

The bayonet fittings 255, 260, 241, 242 each have a bearing face 261 which is arranged spaced apart axially, with respect to the installation axis 35, from the underside 250. The bearing face 261 of the third and/or fourth bayonet fitting 241, 242 is here arranged closer to the underside 250 than at the first and second bayonet fitting 255, 260. The third and fourth bayonet fitting 241, 242 are moreover formed so that they are open on the side facing away from the underside 250, whereas in contrast the first and second bayonet fitting are formed so that they are closed at least in some places.

Figure 10 shows an illustration of the compensation sleeve 30 shown in Figure 8.

The compensation sleeve 30 has a second engagement element 270 on a third outer circumferential side 265, wherein the second engagement element 270 extends away radially outwards from the third outer circumferential side 265. The second engagement element 270 is preferably designed as partially annular and protrudes beyond the third outer circumferential side 265. In the radial direction, the second engagement element 270 is designed as thinner than a radial depth of the first and second bayonet fittings 255, 260.

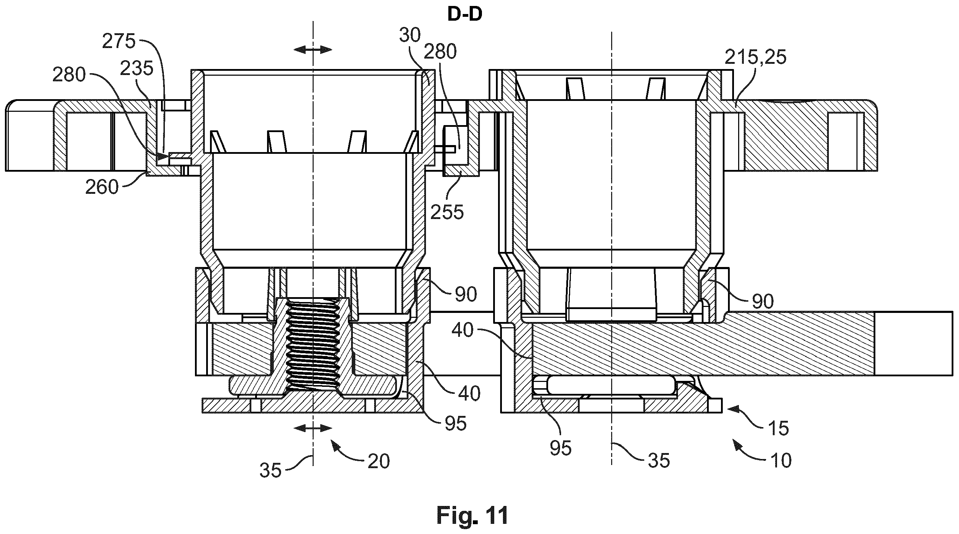

Figure 11 shows a view in section along a plane of section D-D, shown in Figure 1, through the module connector system 10.

In the assembled state, the second engagement element 270 engages into the in each case associated first bayonet fitting 255 or second bayonet fitting 260. A second radial gap 275 between a fourth outer circumferential side 280 of the second engagement element 270 and the bayonet fitting 255, 260 is here provided by the enlarged depth of the in each case associated bayonet fitting 255, 260. The second radial gap 275 ensures that the compensation sleeve 30 is displaceable in a radial direction (xy direction) relative to the third insertion opening 235 such that a tolerance compensation is provided between the second high-current module connector 20 and the connection plate 25. In particular, tolerances of up to 2 mm can here be compensated in the x and y direction between the second high-current module connector 20 and the connection plate 25 and between the first high-current module connector 15 and the second high-current module connector 20. The possibility of secure installation of the connection plate 25 on both the first and the second high-current module connector 15, 20 is enabled as a result. The tolerance compensation can in particular be necessary because, given that the respective connector 45 is designed as a busbar and can subsequently be bent once or more than once, the positioning of the respective high-current module connector 15, 20 is subject to relatively high tolerances or large tolerance chains.

Furthermore, reliable touch protection is ensured at the second high-current module connector 20 by the compensation sleeve 30 in conjunction with the touch protection sleeve 55. Furthermore, reliable touch protection, in particular finger protection, is moreover also reliably ensured at the first high-current module connector 15 by the choice of the radial distance between the connecting sleeve 220 and the touch protection sleeve 55.

In order to assemble the first high-current module connector 15 and/or the second high-current module connector 20, in a first method step the connector 45, the threaded socket 50, the touch protection sleeve 55 and the housing 40 are provided. The touch protection sleeve 55 and the housing 40 can here, for example, be manufactured in separate injection-moulding procedures, for example from a plastic.

In a second method step, the threaded socket 50 is plugged through the through opening 75 with the socket portion 185. In order to prevent twisting of the threaded socket 50 relative to the first connector portion 60, twist protection, for example external toothing, can here be arranged, for example, on the circumference of the socket portion 185. The socket portion 185 is plugged through the through opening 75 in such a way that the carrier portion 195 bears on the first connector portion 60 on the underside on the side facing away from the first insertion opening 90. The socket portion 185 protrudes with the first subregion 160 beyond the top of the contact surface 70.

In a third method step, the connector 45 is plugged, together with the threaded socket 50, through the feed opening 100 into the housing interior 95 perpendicular to the installation axis 35. The spring element 140 here deflects in the direction facing away from the first insertion opening 90. The first region 200 of the threaded socket 50 can moreover be guided through the second subregion 165 of the feed opening 100.

Once the final position of the first connector portion 60 and the threaded socket 50 in the housing interior 95 has been reached, the carrier portion 195 is latched to the latching device 115 and the latching device 115 secures the first connector portion 60 and the threaded socket 50 from slipping out undesirably from the housing interior 95 by the second outer circumferential side 210 abutting the bearing surface 135 of the latching lug 120. Moreover, in the final position the first engagement element 150 engages into the socket portion 185 which is open on the side facing away from the first insertion opening 90 and additionally retains the first connector portion 60, together with the threaded socket 50, in the housing interior 95 in the final position.

In a fourth method step, the touch protection sleeve 55 is plugged via the first insertion opening 90 onto the first subregion 160 protruding beyond the contact surface 70. The touch protection sleeve 55 can here latch onto the first subregion 160.

After the fourth method step, the installation of the first high-current module connector 15 is complete. The second high-current module connector 20 is assembled identically. The small number of method steps can be performed in an entirely automated fashion such that the high-current module connector 15, 20 can be assembled with a high cycle time, also in a fully automated fashion, on a production line.

In order to complete the assembly of the battery module and to assemble the module connector system 10, after the high-current module connector 15, 20 has been installed in a battery module, in a fifth method step the compensation sleeve 30 is assembled on the connection plate 25 via the bayonet connection 245.

In a sixth method step, the compensation sleeve 30 is joined to the connection plate 25 by a plugging and turning movement in such a way that the engagement element 270 engages in the third and fourth bayonet fitting 241, 242. The compensation sleeve 30 is then twisted around the installation axis 35 until the engagement element 270 engages in each case in the first and second bayonet fitting 255, 260.

Together with the compensation sleeve 30, the connection plate 25 is assembled on the first and second high-current module connector 15, 20 in such a way that the connection plate 25, together with the connecting sleeve 220, is oriented so that it is aligned with the first high-current module connector 15 in the xy direction (in the radial direction with respect to the installation axis 35) and the connecting sleeve 220 is inserted into the housing interior 95 of the first high-current module connector 15 via the first insertion opening 90 along the installation axis 35. At the same time, the compensation sleeve 30 is also inserted via the first insertion opening 90 of the second high-current module connector 20 into the housing interior 95 of the second high-current module connector 20, wherein the compensation sleeve 30 is automatically centred relative to the housing 40 of the second high-current module connector 20 by the second radial gap 275. In addition, tolerance compensation in the direction of the installation axis can be provided by the wide configuration of the first and second bayonet fitting 255, 260.

Figure 12 shows a view in section along a plane of section E-E, shown in Figure 1, through the module connector system 10.

A further module connector system 300 is assembled on the module connector system 10. The further module connector system 300 here has a first mating high-current module connector 305 and a second mating high-current module connector 310. The first and second mating high-current module connector 305, 310 is in each case designed, by way of example, as a plug, wherein the first and second mating high-current module connector 305, 310 in each case has a screw 315, wherein the screw 315 is in each case screwed in along the installation axis 35 with a threaded portion 320 in the socket portion 185 of the associated first and second high-current module connector 15, 20.

By virtue of the configuration of the socket portion 185 of the threaded socket 50 as open on both sides, a sufficiently long screw-in depth of the threaded portion 320 of the screw 315 is ensured in order thus to ensure that a contact element 325 of the respective first and second mating high-current module connector 305, 310 is pressed securely against the contact surface 70 of the associated first and second high-current module connector 15, 20. Secure transmission of current between the first high-current module connector 15 and the first mating high-current module connector 305 and the second high-current module connector 20 and second mating high-current module connector 310 is ensured as a result.

Moreover, a screwing risk, in particular collision of the screw 315 when the first and/or second mating high-current module connector 305, 310 are screwed into the respective associated socket portion 185 of the first and second high-current module connector 15, 20, is avoided such that the further module connector system 300 can also be installed simply and quickly on the module connector system 10.

Moreover, it is avoided that a screw end runs up against a closed socket portion. Furthermore, it is ensured that the first mating high-current module connector 305 can be satisfactorily centred on the first high-current module connector 15 by the connecting sleeve 220 and that the second mating high-current module connector 310 can be satisfactorily centred on the second high-current module connector 20 by the compensation sleeve 30.

Furthermore, the housing 40 can be produced particularly cost-effectively in a single injection-moulding procedure by virtue of the configuration of the housing 40 as a single piece and from a single material.

## Claims

1. High-current module connector (15, 20) for an electric vehicle,
wherein the high-current module connector (15, 20) has at least one electrical connector (45) with a first connector portion (60), a threaded socket (50) and a housing (40),
wherein the housing (40) is designed in the manner of a hollow body and encloses a housing interior (95) at least in some places,
wherein the housing (40) has a latching device (115), a first insertion opening (90) arranged at the end and a feed opening (100) on a housing portion (80) extending circumferentially around the installation axis (35),
wherein the connector (45) traverses the first feed opening (100) in such a way that the first connector portion (60) and the threaded socket (50) arranged on the first connector portion (60) are arranged in the housing interior (95),
wherein the latching device (115) is arranged at the feed opening (100),
wherein the latching device (115) retains the first connector portion (60) and the threaded socket (50) in the housing interior (95) by the threaded socket (50) bearing against the latching device (115).

2. High-current module connector (15, 20) according to Claim 1,
wherein the connector (45) has a through opening (75) extending along the installation axis (35) in the first connector portion (60),
wherein the threaded socket (50) has a socket portion (185) extending along the installation axis (35) and a carrier portion (195) adjoining the socket portion (185) and which protrudes beyond the socket portion (185) in a radial direction with respect to the installation axis (35),
wherein the socket portion (185) traverses the through opening (75) of the connector (45) along the installation axis (35) and the carrier portion (195) bears against the first connector portion (60) on a side facing away from the first insertion opening (90),
wherein the latching device (115) has a bearing surface (135) on a side facing the housing interior (95),
wherein a second outer circumferential side (210) of the carrier portion (195) bears against the bearing surface (135).

3. High-current module connector (15, 20) according to one of the preceding claims, wherein the housing (40) is manufactured as a single piece and from a single material, an electrically non-conductive first material.

4. High-current module connector (15, 20) according to one of the preceding claims, wherein the housing (40) has a base portion (85) which is arranged opposite the first insertion opening (90) and delimits the housing interior (95) in some places, wherein the housing (40) has a spring element (140), connected to the base portion (85), on the base portion (85),
wherein the spring element (140) has a first engagement element (150), extending in the direction of the first insertion opening (90), at a second free end (145) of the spring element (140),
wherein the first engagement element (150) engages in the threaded socket (50) on a side facing away from the first insertion opening (90).

5. High-current module connector (15, 20) according to one of the preceding claims, wherein the threaded socket (50) protrudes beyond the first connector portion (60) with a first region (200) on a side facing the first insertion opening (90),
wherein the feed opening (100) has at least one first subregion (160) and one second subregion (165) adjoining the first subregion (160) in the circumferential direction,
wherein the second subregion (165) is designed as being wider along the installation axis (35) than the first subregion (160),
wherein the first region (200) of the threaded socket (50) can be passed through the second subregion (165).

6. High-current module connector (15, 20) according to Claim 5,
wherein the first subregion (160) of the feed opening (100) is formed along the installation axis (35) so that it corresponds to an extent of the first connector portion (60) along the installation axis (35).

7. High-current module connector (15, 20) according to one of the preceding claims, having a touch protection sleeve (55),
wherein the touch protection sleeve (55) is arranged so that it is spaced apart from the housing (40) in the housing interior (95) on a side, facing the first insertion opening (90), of the first connector portion (60) at the threaded socket (50).

8. Module connector system (10)
having a connection plate (25) and a first high-current module connector (15), wherein the first high-current module connector (15) is designed according to one of the preceding claims,
wherein the connection plate (25) is arranged so that it is offset axially with respect to the housing (40) relative to the installation axis (35),
wherein the connection plate (25) has a plate portion (215), a second insertion opening (225) arranged in the plate portion (215), and a connecting sleeve (220), wherein the connecting sleeve (220) extends along the installation axis (35) in the direction of the first high-current module connector (15) and is arranged at the second insertion opening (225) on the plate portion (215),
wherein the connecting sleeve (220) engages in the first insertion opening (90) of the first high-current module connector (15).

9. Module connector system (10) according to Claim 8,
having a second high-current module connector (20), arranged offset with respect to the first high-current module connector (15), according to one of Claims 1 to 7 and a compensation sleeve (30),
wherein the plate portion (215) has a third insertion opening (235),
wherein the third insertion opening (235) is arranged offset with respect to the second insertion opening (225) in the plate portion (215),
wherein the compensation sleeve (30) extends along the installation axis (35) of the second high-current module connector (20) in the direction of the second high-current module connector (20),
wherein the compensation sleeve (30) traverses the first insertion opening (90) of the second high-current module connector (20) and the third insertion opening (235),
wherein the compensation sleeve (30) is connected to the connection plate (25) so that it can be displaced in the radial direction with respect to the installation axis (35) of the second high-current module connector (20).

10. Module connector system (10) according to Claim 8 or 9,
wherein the compensation sleeve (30) is connected to the connection plate (25) by means of a bayonet connection (245).

11. Method for installing a high-current module connector (15, 20) according to one of Claims 1 to 7,
wherein the electrical connector (45), the threaded socket (50) and the housing (40) are provided,
wherein the threaded socket (45) is guided through the first connector portion (60), wherein the electrical connector (45) is guided, together with the threaded socket (50), through the feed opening, inclined with respect to the installation axis (35), wherein the latching device (120) latches onto the threaded socket (50) and secures the first connector portion (60), together with the threaded socket (55), in the housing interior (95) by the threaded socket (55) bearing against the latching device (120).
